# FASCICULE DE BREVET EUROPEEN

(11) **EP 3 443 305 B1**
(45) Date de publication et mention de la délivrance du brevet: **12.07.2023**
(21) Numéro de dépôt: 17725293.9
(22) Date de dépôt: 13.04.2017
(51) Int. Cl.: G01D 11/24, G01D 5/244

(54) **DÉTECTEUR AUTONOME, DISPOSITIF ET PROCÉDÉ DE CARTOGRAPHIE COMPORTANT UN TEL DÉTECTEUR**
AUTONOMER DETEKTOR UND MAPPING-VORRICHTUNG UND VERFAHREN MIT SOLCH EINEM DETEKTOR
SELF-CONTAINED DETECTOR, AND MAPPING DEVICE AND METHOD INCLUDING SUCH A DETECTOR

(30) Priorité: 13.04.2016 FR 1653248
(43) Date de publication de la demande: 20.02.2019
(73) Titulaire: Lissandre, Marie-Anne, 30200 Saint Michel d'Euzet (FR); Ballier, Aurélien, 30330 Cavillargues (FR)
(72) Inventeur: Lissandre, Marie-Anne, 30200 Saint Michel d'Euzet (FR); Ballier, Aurélien, 30330 Cavillargues (FR)
(74) Mandataire: Cornuejols, Georges
(86) Numéro de dépôt international: PCT/FR2017/050888
(87) Numéro de publication internationale: WO 2017/178763

(56) Documents cités:
- WO-A1-2014/055584
- WO-A2-2008/157298
- WO-A2-2012/112938
- CN-B- 102 621 571
- US-A1- 2011 074 700
- US-A1- 2013 222 115

## Description

### DOMAINE TECHNIQUE DE L'INVENTION

La présente invention vise un détecteur autonome de mesure d'une grandeur physique, un dispositif de cartographie de mesures et un procédé de mesures. Elle s'applique, notamment, au domaine des interventions sur sites contaminés, ou suite à un événement sismique ou un incendie par exemple.

### ETAT DE LA TECHNIQUE

Sur un site industriel mettant en oeuvre des radioéléments ou des composés chimiques potentiellement toxiques et nocifs à la santé humaine, une cartographie de la présence d'un risque doit être réalisée préalablement à toute intervention humaine.

Cette cartographie est basée sur des mesures réalisées sur le site.

Ce type de mesures est traditionnellement réalisé au moyen d'instruments de mesure nucléaire ou d'une grandeur physique manipulés soit directement par un opérateur positionné à faible distance de la matière à investiguer, et au mieux équipé d'une perche munie d'un détecteur à une de ses extrémités permettant un éloignement relatif, soit par un robot porteur dont l'utilisation reste limitée, complexe, longue et onéreuse quand elle n'est pas tout simplement impossible selon la configuration du site à cartographier.

Ainsi, les systèmes actuels limitent la distance entre la présence humaine et la matière à investiguer, ce qui peut générer selon les niveaux de toxicité radiologique et/ou chimique des conditions d'exposition des opérateurs inacceptables rendant la réalisation de mesures impossible.

À défaut, les interventions peuvent être limitées et partielles, les systèmes de mesure nucléaire traditionnellement utilisés pouvant donc induire des zones manquantes ou des zones avec des erreurs de mesure difficilement quantifiables rendant l'exploitation des cartographies impossible.

La contrainte de distance liée à l'utilisation des systèmes traditionnels de mesure nucléaire rend les investigations impossibles dans des endroits dont les conditions de sécurité ne sont pas adaptées à une intervention humaine ou présentant un risque d'évolution au cours d'intervention, à l'image d'un sol instable suite à une dégradation du génie civil d'un bâtiment, voire à la suite d'un séisme.

Les systèmes de mesure nucléaire traditionnellement utilisés impliquent la réalisation des relevés quasiment points par points, ce qui contraint le temps total d'acquisition du nombre des mesures et interdit de disposer de la réactivité nécessaire face à des événements accidentels et éventuellement étendus.

Les techniques d'exploitation des mesures permettant d'établir les cartographies sont traditionnellement utilisées suite à des mesures in situ réalisées au préalable, ce qui ne permet pas d'analyser les valeurs en temps réel. Afin d'obtenir une cartographie complète il est nécessaire d'affiner les données d'entrée en nombre de mesures et/ou en localisation, d'identifier les valeurs incohérentes et de réaliser les mesures complémentaires, mesures entraînant une multiplication des interventions et des risques associés.

On connaît, par exemple, des systèmes tels que décrits dans la demande de brevet WO 2008/157298 publiée le 24 décembre 2008. Toutefois, de tels systèmes ne permettent pas d'éviter l'intrusion de particules à l'intérieur du dispositif.

Le document US2013/222115 décrit également un dispositif selon l'état de la technique.

### OBJET DE L'INVENTION

La présente invention vise à remédier à tout ou partie de ces inconvénients.

A cet effet, selon un premier aspect, la présente invention vise un détecteur autonome de mesure d'une grandeur physique, qui comporte :
- au moins un capteur d'une valeur représentative d'une grandeur physique,
- un moyen de géolocalisation, configuré pour fournir des coordonnées de géolocalisation du détecteur,
- un émetteur d'un signal sans-fil représentatif de chaque valeur captée et des coordonnées déterminées et
- une source d'alimentation électrique autonome configurée pour alimenter le détecteur,
chaque capteur, le moyen de géolocalisation, l'émetteur et la source d'alimentation étant embarqués dans une enveloppe souple, pour résister à des chocs, et dans une enveloppe étanche.

Grâce à ces dispositions, la mesure d'une grandeur physique, permet la réalisation d'une cartographie, par exemple, qui peut être réalisée automatiquement via un ensemble de mesures provenant de détecteurs similaires. Les enveloppes permettent au détecteur d'être jeté ou largué sur un site terrestre et/ou marin, depuis un drone par exemple, ce détecteur transmettant à la fois une donnée de géolocalisation et une donnée de mesure. De plus, le caractère étanche de l'enveloppe permet d'éviter l'intrusion de particules à l'intérieur du détecteur.

Ces dispositions permettent ainsi d'investiguer rapidement dans des endroits présentant vraisemblablement un risque pour la santé humaine, inaccessibles ou étendus pour établir une estimation de l'activité radiologique et/ou des analyses d'autre nature selon des conditions de sécurité maîtrisées.

De plus, le détecteur objet de la présente invention permet l'envoi successif de signaux sans-fil de manière à actualiser la mesure.

Dans des modes de réalisation, l'espace intérieur de l'enveloppe, entre chaque capteur, le moyen de géolocalisation, l'émetteur et la source d'alimentation, est rempli d'une mousse ou d'air.

Ces modes de réalisation permettent d'assurer la résistance aux chocs du détecteur.

Dans des modes de réalisation, l'émetteur agit également comme récepteur, le détecteur comportant un moyen de détermination d'une périodicité d'émission configuré pour provoquer une émission d'un signal, par l'émetteur, en fonction d'une information de périodicité contenue dans un signal reçu par le récepteur.

Ces modes de réalisation permettent d'optimiser la longévité énergétique du détecteur dans le cas d'interventions de longue durée, par exemple.

Dans des modes de réalisation, le détecteur objet de la présente invention comporte un moyen de communication à une distance inférieure à la distance de communication d'un réseau local sans-fil.

Ces modes de réalisation permettent la configuration du détecteur en amont du déploiement ou lui permettent de servir d'émetteur dans une utilisation conventionnelle du dispositif ou en intérieur selon la nature du site à analyser.

Selon un deuxième aspect, la présente invention vise un dispositif de cartographie de mesures d'une grandeur physique, qui comporte :
- au moins un détecteur autonome objet de la présente invention et
- un récepteur d'au moins un signal sans-fil émis par au moins un détecteur et
- un système d'affichage configuré pour afficher au moins une valeur représentative reçue dans le signal et une information représentative des coordonnées associées à la valeur reçue.

Grâce à ces dispositions, une cartographie des mesures peut être réalisée, la cartographie réalisée pouvant évoluer en temps réel.

Dans des modes de réalisation, le dispositif objet de la présente invention comporte un moyen de dispersion de chaque détecteur sur un site destiné à être cartographié par le dispositif.

Ces modes de réalisation permettent un placement éventuellement automatique de chaque détecteur, en des lieux hors de portée de lancer d'un homme notamment.

Dans des modes de réalisation, le dispositif objet de la présente invention comporte un moyen de génération d'une carte de courbes d'isolignes et d'une carte de variance en fonction de chaque valeur et coordonnée, associée à chaque dite valeur, reçue.

Une carte de variance permettant de schématiser les incertitudes associées à la carte de courbes d'isolignes, cette carte permet donc de connaitre la fiabilité des données et de les compléter au besoin.

Ces modes de réalisation permettent l'affichage d'une cartographie globale à partir de mesures ponctuelles fiables et d'un algorithme fournissant des valeurs estimées complémentaires.

Dans des modes de réalisation, le dispositif objet de la présente invention comporte :
- une source d'alimentation électrique autonome sur batteries rechargeables ou jetables et
- un moyen de transfert d'énergie électrique à au moins un détecteur relié à la source d'alimentation.

Ces modes de réalisation permettent de charger ou de recharger un détecteur relié à la source d'alimentation, ce qui rend le dispositif mobile et plus durable énergétiquement.

Dans des modes de réalisation, le dispositif objet de la présente invention comporte un moyen de détermination de coordonnées d'un détecteur à positionner en fonction des coordonnées reçues d'au moins deux détecteurs et un moyen d'affichage des coordonnées déterminées.

Ces modes de réalisation permettent de suggérer à un utilisateur du dispositif un positionnement préférentiel d'un détecteur non encore dispersé de manière à améliorer la fiabilité de la cartographie réalisée.

Dans des modes de réalisation, le dispositif objet de la présente invention comporte un moyen de communication, vers un terminal communiquant externe, d'au moins une information représentative d'au moins une valeur reçue, par le dispositif, et d'au moins une information représentative des coordonnées associées à la valeur reçue.

Ces modes de réalisation permettent, par exemple, d'afficher des informations sur un affichage tête haute, sur un ordiphone ou sur tout autre terminal externe.

Selon un troisième aspect, la présente invention vise un procédé de cartographie de mesures d'une grandeur physique sur un site, qui comporte :
- une étape de dispersion sur le site d'au moins un détecteur objet de la présente invention,
- une étape de capture, par chaque détecteur, d'une valeur représentative d'une grandeur physique,
- une étape de géolocalisation, par chaque détecteur, dudit détecteur,
- une étape d'émission, par chaque détecteur, d'un signal sans-fil représentatif de la valeur et de coordonnées de géolocalisation déterminées au cours de l'étape de géolocalisation,
- une étape de réception, par un récepteur, de chaque signaux sans-fil émis par chaque détecteur et
- une étape d'affichage, sur un écran, d'au moins une valeur représentative reçue dans le signal à une position sur l'écran correspondant aux coordonnées associées à la valeur reçue.

Les buts, avantages et caractéristiques particulières du procédé objet de la présente invention étant similaires à ceux du dispositif objet de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier du détecteur, du dispositif et du procédé objets de la présente invention, en regard des dessins annexés, dans lesquels :
- la figure 1 représente, schématiquement, un mode de réalisation particulier du détecteur objet de la présente invention,
- la figure 2 représente, schématiquement, un mode de réalisation particulier du dispositif objet de la présente invention,
- la figure 3 représente, schématiquement et sous forme d'un logigramme, une succession d'étapes particulière du procédé objet de la présente invention et
- la figure 4 représente, schématiquement un exemple de courbes d'isolignes pouvant être générées par le dispositif.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

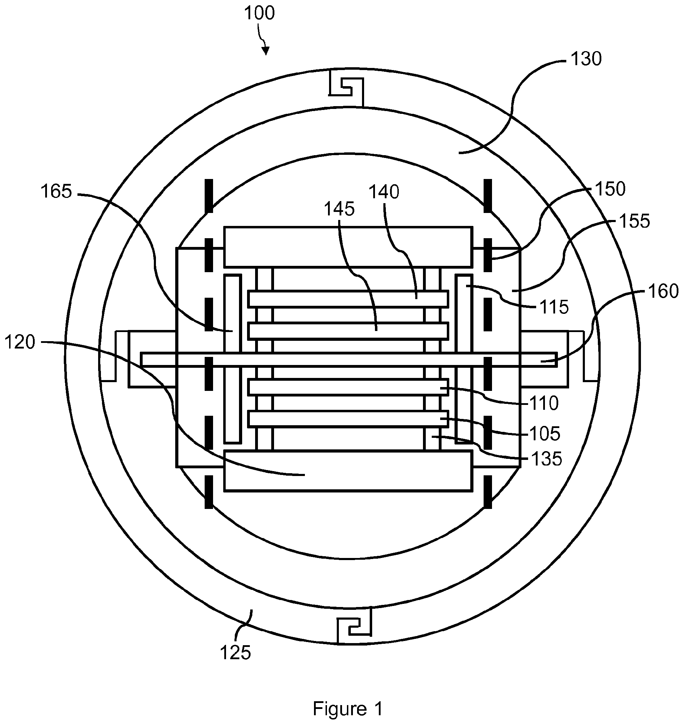

On observe, sur la figure 1, qui n'est pas à l'échelle, une vue schématique d'un mode de réalisation du détecteur 100 objet de la présente invention. Ce détecteur 100 autonome de mesure d'une grandeur physique, comporte :
- au moins un capteur 105 d'une valeur représentative d'une grandeur physique,
- un moyen 110 de géolocalisation, configuré pour fournir des coordonnées de géolocalisation du détecteur,
- un émetteur 145 et/ou récepteur d'un signal sans-fil représentatif de chaque valeur captée et des coordonnées déterminées et
- une source 120 d'alimentation électrique autonome configurée pour alimenter le détecteur,
chaque capteur, le moyen de géolocalisation, l'émetteur et la source d'alimentation étant embarqués dans une enveloppe 125 souple, pour résister à des chocs, et dans une enveloppe 130 étanche.

Le capteur 105 mesure, par exemple, un flux de particules et/ou une énergie des particules.

Ce capteur 105 est, par exemple :
- un capteur mettant en oeuvre l'ionisation d'un gaz par les rayonnements émis par les radioéléments à proximité du détecteur 100,
- un capteur à scintillations,
- un capteur utilisant le noircissement de films photographiques,
- un capteur thermoluminescent,
- un capteur à semi-conducteurs,
- un capteur de dosimétrie par résonnance paramagnétique électronique ou
- un capteur de dosimétrie chimique.

Le fonctionnement de ces différents capteurs étant décrit dans les ouvrages de référence du domaine de la mesure radiologique, celui-ci n'est pas repris ici.

Ce capteur 105 est préférentiellement conçu pour capter et quantifier le rayonnement gamma.

Ce capteur 105 est intégré à une carte électronique, aussi appelée circuit imprimé.

Dans des variantes, ce capteur 105 capte une température, une vitesse de déplacement du détecteur 100, un mouvement ou des vibrations, une énergie cinétique, un polluant ou une pression.

Le moyen de géolocalisation 110 est, par exemple, une balise GPS (pour « Global Positioning System », traduit par « système de positionnement global ») dont le fonctionnement, largement décrit dans la littérature, n'est pas repris ici.

Ce moyen de géolocalisation 110 est intégré à une carte électronique, aussi appelée circuit imprimé, identique ou distincte de la carte associée au capteur 105.

L'émetteur et/ou récepteur 145 est, par exemple, une puce électronique mettant en oeuvre :
- la norme GPRS (pour « General Packet Radio Service », traduit par « service général de paquets radio »),
- la technologie SigFox (marque déposée),
- la technologie LoRA (marque déposée) ou
- une technologie de transmission à étalement de spectre.

Le choix de la technologie utilisée est déterminé en fonction de l'optimisation souhaitée entre le détecteur 100 et le récepteur (non représenté) du signal émis par l'émetteur et/ou récepteur 145.

Cet émetteur et/ou récepteur 145 est intégré à une carte électronique, aussi appelée circuit imprimé, identique ou distincte de la carte associée au capteur 105 et/ou au moyen de géolocalisation 110.

L'émetteur et/ou récepteur 145 est accompagné d'une antenne 115 spécifique à la technique de communication mise en oeuvre.

Le moyen de localisation 110 est accompagné d'une antenne 165 spécifique à la technique de localisation mise en oeuvre.

La source d'alimentation 120 électrique autonome est, par exemple, une batterie ou une pile. Cette batterie peut être de tout type connu de l'homme du métier. Dans des variantes, la source d'alimentation 120 comporte plusieurs batteries.

Chaque capteur 105, le moyen de géolocalisation 110, l'émetteur et/ou récepteur 145 et la source d'alimentation 120 sont embarqués dans les enveloppes 125 et 130.

L'enveloppe interne 130, est réalisée, par exemple, en matériau plastique rigide, tel du polyéthylène, avec une densité proche de 1 g/cm³ afin de simuler l'absorption des rayonnements gamma par le corps humain.

L'enveloppe externe 125 est réalisée, par exemple, en un matériau, tel du polyuréthane, rempli d'air avec une densité proche de 0.1g/cm³.

Ces enveloppes 125 et 130 peuvent être réalisées en une seule pièce, moulée autour des composants. Dans des variantes, ces enveloppes peuvent être formées de deux parties enclipsées ou colées l'une à l'autre.

Dans des variantes, les enveloppes 125 et 130 peuvent comporter plusieurs couches réalisées en une même matière ou en matières distinctes.

Dans des variantes les enveloppes 125 et 130 présentent une forme de sphère.

Dans des modes de réalisation, le détecteur autonome 10 de mesure de mesure d'une grandeur physique est intégré sous une autre forme à des dispositifs divers d'investigation, par exemple. Dans des modes de réalisation, le dispositif 10 est intégré à un robot d'investigation téléguidé, ou à un équipement d'analyse d'un site, tel un dispositif d'extraction d'échantillons de sols, notamment de carottages, par exemple.

Dans des modes de réalisation préférentiels, tel que celui représenté en figure 1, l'espace 155 intérieur des enveloppes 125 et 130, entre chaque capteur 105, le moyen 110 de géolocalisation, l'émetteur et/ou récepteur 145 et la source 120 d'alimentation, est rempli d'une mousse.

Cette mousse, est, par exemple, de la mousse polyuréthane.

Dans des variantes, l'espace 155 intérieur est rempli d'air.

Dans des modes de réalisation préférentiels, tel que celui de représenté en figure 1, au moins deux éléments parmi chaque capteur 105, le moyen 110 de géolocalisation et/ou l'émetteur et/ou récepteur 145 sont montés chacun sur au moins une carte distincte.

Dans le cas où plusieurs cartes sont mises en oeuvre, les cartes sont fixées entre elles via des silent blocks 135, ou silentbloc (marque déposée), garantissant la tenue mécanique et l'absorption des chocs.

Les silent blocks sont fixés à une plaque 160 prisonnière de l'enveloppe 130. Cette plaque de préférence en ébonite permet d'absorber les chocs.

Dans des modes de réalisation préférentiels, tel que celui de représenté en figure 1, le détecteur 100 comporte un moyen 140 de détermination d'une périodicité d'émission configuré pour provoquer une émission d'un signal, par l'émetteur, en fonction d'une information de périodicité contenue dans un signal reçu par le récepteur.

Ce moyen de détermination 140 est, par exemple, un logiciel informatique embarqué dans une carte électronique.

Dans des modes de réalisation préférentiels, tel que celui de représenté en figure 1, le détecteur 100 comporte un moyen 140 de communication à une distance inférieure à la distance de communication d'un réseau local sans-fil.

Ce moyen de communication 140 est, par exemple, une puce électronique configurée pour émettre des signaux sans-fil selon le standard IEEE 802.11 dit « Wi-Fi », ou selon la technologie Bluetooth (marque déposée).

Ce moyen de communication 140 est intégré à une carte électronique, aussi appelée circuit imprimé, identique ou distincte de la carte associée au capteur 105, au moyen de géolocalisation 110 et/ou à l'émetteur et/ou récepteur 145.

Dans des modes de réalisation, non représentés, le capteur 105 est configuré pour capter la présence de la matière à détecter et/ou quantifier à proximité du détecteur 100. Dans ces modes de réalisation, les enveloppes, 125 et 130, comportent des orifices permettant le passage d'air de l'environnement extérieur jusqu'au capteur 105.

Dans ces modes de réalisation, le détecteur 100 comporte un circuit d'adduction d'air par aspiration permettant d'emmener l'air extérieur dans un circuit à l'intérieur du détecteur 100 et à proximité du capteur 105. Le capteur 105 est positionné à l'intérieur du circuit d'air, et est relié au détecteur 100 via un câble et un presse étoupe étanche.

Dans des modes de réalisation, non représentés, chaque enveloppe, 125 et 135, est transparente et le détecteur 100 comporte au moins une caméra, positionnée à l'intérieur de l'enveloppe, orientée vers l'extérieur du détecteur 100. Dans des modes de réalisation préférentiels, le détecteur 100 comporte plusieurs telles caméras.

Dans des modes de réalisation, non représentés, le détecteur 100 comporte un moteur pour provoquer une rotation des enveloppes, 125 et 130, de manière à permettre le déplacement du détecteur 100.

Afin de déplacer le dispositif les enveloppes et les éléments internes sont dissociés, et le dispositif comporte des moteurs reliés à des roues à l'intérieur des enveloppes permettant de déclencher la rotation du détecteur sur lui-même.

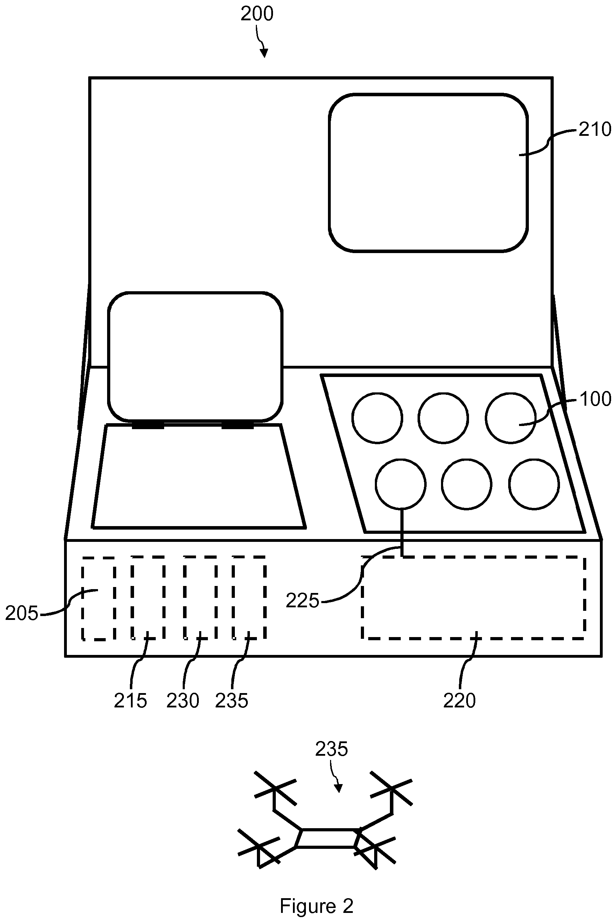

On observe, sur la figure 2, schématiquement, un mode de réalisation particulier du dispositif 200 objet de la présente invention. Ce dispositif 200 de cartographie de mesures, comporte :
- au moins un détecteur 100 autonome tel que décrit en regard de la figure 1 et
- un récepteur 205 d'au moins un signal sans-fil émis par au moins un détecteur
   et
- un système 210 d'affichage configuré pour afficher au moins une valeur représentative reçue dans le signal et une information représentative des coordonnées associées à la valeur reçue.

Le récepteur 205 est, par exemple, une antenne configurée pour recevoir des signaux sans-fil selon une technique correspondant à la technique d'émission de l'émetteur 115.

Dans des modes de réalisation, le dispositif 200 comporte une mémoire configurée pour enregistrer chaque valeur et chaque position associée reçue.

Dans des modes de réalisation préférentiels, tel que celui représenté en figure 2, le dispositif 200 comporte un moyen 235 de dispersion de chaque détecteur 100 sur un site destiné à être cartographié par le dispositif.

Ce moyen de dispersion 235 est, par exemple, un drone terrestre ou aérien comportant un moyen (non représenté) de préhension d'au moins un détecteur 100. Ce moyen de dispersion 235 est commandé via un moyen de commande (non représenté) du dispositif 200 ou via un moyen de commande dédié.

Dans des modes de réalisation préférentiels, tel que celui représenté en figure 2, le dispositif 200 comporte un moyen 215 de génération d'une carte de courbes d'isolignes et d'une carte de variance en fonction de chaque valeur et coordonnée, associée à chaque dite valeur, reçue.

Dans le contexte de la capture radiologique, l'isoligne considérée est, par exemple, une isodose.

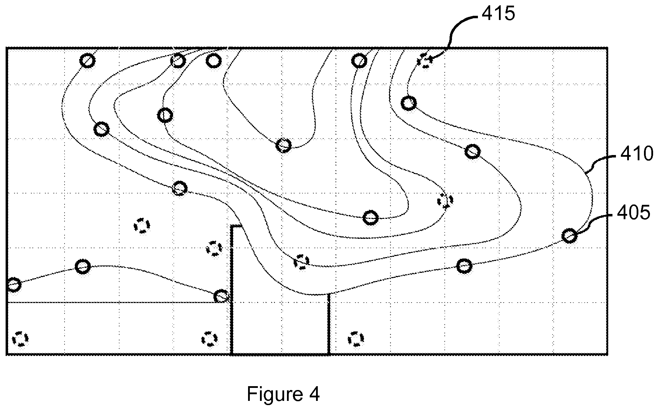

Ce moyen de génération 215 est, par exemple, un logiciel embarqué sur un circuit électronique de commande du système 210 d'affichage, tel un écran par exemple. Un exemple de carte ainsi générée est représenté en figure 4.

Sur cette carte, on observe :
- le positionnement 405 de détecteurs 100 déployés sur un site,
- le positionnement 415 recommandé de nouveaux détecteurs 100 sur le site et
- les isolignes 410 estimées par le dispositif 200.

Dans des modes de réalisation préférentiels, tel que celui représenté en figure 2, le dispositif 200 comporte :
- une source 220 d'alimentation électrique autonome et
- un moyen 225 de transfert d'énergie électrique à au moins un détecteur 100 relié à la source d'alimentation.

La source d'alimentation 220 est, par exemple, une batterie chargée par connexion à une source d'alimentation (non représentée) externe ou par collecte d'énergies renouvelables, via un panneau solaire par exemple.

Le moyen de transfert 225 est, par exemple, un chargeur de batteries par induction ou par câble.

Dans des modes de réalisation préférentiels, tel que celui représenté en figure 2, le dispositif 200 comporte un moyen 230 de détermination de coordonnées d'un détecteur 100 à positionner en fonction des coordonnées reçues d'au moins deux détecteurs et un moyen 210 d'affichage des coordonnées déterminées.

Ce moyen de détermination 230 est, par exemple, un logiciel informatique embarqué dans un circuit électronique. Ce logiciel informatique détermine une valeur d'incertitude associée à chaque valeur estimée, et donne lieu à une recommandation de positionnement d'un détecteur 100 aux coordonnées associées à la valeur d'incertitude.

Dans des modes de réalisation, tel que celui représenté en figure 2, le dispositif 200 comporte une interface de programmation de chaque détecteur 100. Cette interface de programmation permet de réaliser un test de détecteur 100 avant la dispersion de ce détecteur 100 sur le site.

Cette interface de programmation permet également à un utilisateur de saisir une périodicité d'émission de signaux, la périodicité entrée étant enregistrée par chaque détecteur 100, l'émetteur 115 de chaque détecteur 100 émettant un signal selon la périodicité enregistrée.

Dans des modes de réalisation, le récepteur 205 agit également comme émetteur d'une périodicité d'émission de signaux, entrée par un utilisateur, en direction d'au moins un détecteur 100, l'émetteur 115 de chaque détecteur 100 émettant un signal selon la périodicité émise.

Dans des modes de réalisation, le dispositif 200 comporte un moyen de transmission (non représenté) de chaque valeur et position affichée sur l'écran 115, préférentiellement sous forme d'une carte, à un terminal distant.

Dans des modes de réalisation, le dispositif 200 comporte un moyen 235 de communication, vers un terminal communiquant externe, d'au moins une information représentative d'au moins une valeur reçue, par le dispositif, et d'au moins une information représentative des coordonnées associées à la valeur reçue.

Le terminal communicant externe est, par exemple :
- un ordinateur éventuellement portable,
- une montre connectée,
- un affichage tête-haute ou
- un navigateur-afficheur GPS.

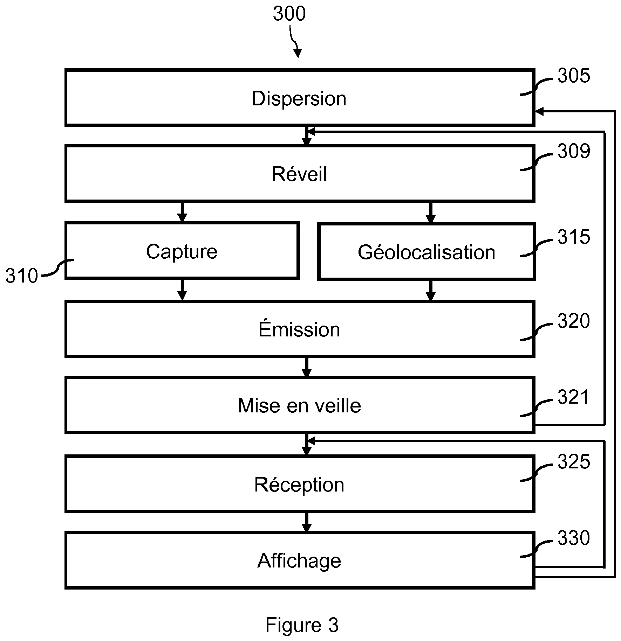

On observe, sur la figure 3, un logigramme d'étapes particulier du procédé 300 objet de la présente invention. Ce procédé 300 de cartographie de mesures d'une grandeur physique sur un site, comporte :
- une étape 305 de dispersion sur le site d'au moins un détecteur 100 tel que décrit en regard de la figure 1,
- une étape 309 de réveil de chaque détecteur dispersé,
- une étape 310 de capture, par chaque détecteur, d'une valeur représentative d'une grandeur physique,
- une étape 315 de géolocalisation, par chaque détecteur, dudit détecteur,
- une étape 320 d'émission, par chaque détecteur, d'un signal sans-fil représentatif de la valeur et de coordonnées de géolocalisation déterminées au cours de l'étape de géolocalisation,
- une étape 321 de mise en veille de chaque détecteur dispersé,
- une étape 325 de réception, par un récepteur, de chaque signaux sans-fil émis par chaque détecteur et
- une étape 330 d'affichage, sur un écran, d'au moins une valeur représentative reçue dans le signal à une position sur l'écran correspondant aux coordonnées associées à la valeur reçue.

Dans des modes de réalisation, le procédé 300 objet de la présente invention comporte une étape de génération de courbes d'isodose et d'une carte de variance associée, ces courbes et cette carte étant affichées au cours de l'étape 330 d'affichage.

Ce procédé 300 est réalisé, par exemple, par la mise en oeuvre du dispositif 200 objet de la présente invention.

## Revendications

1. Dispositif (200) de cartographie de mesures d'une grandeur physique, **caractérisé en ce qu'**il comporte :
- au moins deux détecteurs (100) autonomes de mesure d'une grandeur physique, qui comportent chacun:
- au moins un capteur (105) d'une valeur représentative d'une grandeur physique,
- un moyen (110) de géolocalisation, configuré pour fournir des coordonnées de géolocalisation du détecteur,
- un émetteur (145) d'un signal sans-fil représentatif de chaque valeur captée et des coordonnées déterminées, l'émetteur (145) agissant également comme récepteur, et
- une source (120) d'alimentation électrique autonome configurée pour alimenter le détecteur,
chaque capteur, le moyen de géolocalisation, l'émetteur et la source d'alimentation étant embarqués dans une enveloppe (125) souple, pour résister à des chocs, et dans une enveloppe (130) étanche,
le dispositif (200) comprenant par ailleurs:
- un récepteur (205) d'au moins un signal sans-fil émis par au moins un détecteur et
- un système d'affichage configuré pour afficher au moins une valeur représentative reçue dans le signal et une information représentative des coordonnées associées à la valeur reçue
- une source (220) d'alimentation électrique autonome sur batteries rechargeables ou jetables et
- un moyen (225) de transfert d'énergie électrique à au moins un détecteur (100) relié à la source d'alimentation.
**caractérisé en ce que** le dispositif (200) comporte, de plus, un moyen (230) de détermination de coordonnées d'un détecteur (100) à positionner en fonction des coordonnées reçues d'au moins deux détecteurs et un moyen (210) d'affichage des coordonnées déterminées.

2. Dispositif selon la revendication 1, , dans lequel l'espace (130) intérieur de l'enveloppe de chaque détecteur autonome (100), entre chaque capteur (105), le moyen (110) de géolocalisation, l'émetteur (145) et la source (120) d'alimentation, est rempli d'une mousse ou d'air.

3. Dispositif selon l'une des revendications 1 ou 2 dans lequel le détecteur autonome (100) comporte un moyen (140) de communication à une distance inférieure à la distance de communication d'un réseau local sans-fil selon le standard IEEE 802.11 dit « Wi-Fi », ou selon la technologie Bluetooth.

4. Dispositif (200) selon l'une des revendications 1 à 3, qui comporte un moyen de dispersion de chaque détecteur (100) sur un site destiné à être cartographié par le dispositif.

5. Dispositif (200) selon l'une des revendications 1 à 4, qui comporte un moyen (215) de génération d'une carte de courbes d'isolignes et d'une carte de variance en fonction de chaque valeur et coordonnée, associée à chaque dite valeur, reçue.

6. Dispositif selon l'une des revendications 1 à 5, qui comporte un moyen (235) de communication, vers un terminal communiquant externe, d'au moins une information représentative d'au moins une valeur reçue, par le dispositif, et d'au moins une information représentative des coordonnées associées à la valeur reçue.

7. Procédé (300) de cartographie de mesures d'une grandeur physique sur un site, à l'aide d'un dispositif (200) selon l'une des revendications 1 à 6, **caractérisé en ce qu'**il comporte :
- une étape (305) de dispersion sur le site d'au moins un détecteur (100) du dit dispositif (200),
- une étape (310) de capture, par chaque détecteur, d'une valeur représentative d'une grandeur physique,
- une étape (315) de géolocalisation, par chaque détecteur, dudit détecteur,
- une étape de réception d'un signal représentatif de chaque valeur captée et des coordonnées déterminées par chaque détecteur,
- une étape (330) d'affichage, sur un écran, d'au moins une valeur représentative reçue dans le signal à une position sur l'écran correspondant aux coordonnées associées à la valeur reçue
- une étape de transfert d'énergie électrique à au moins un détecteur (100) relié à la source d'alimentation et
- une étape de détermination de coordonnées d'un détecteur (100) à positionner en fonction des coordonnées reçues d'au moins deux détecteurs et un moyen (210) d'affichage des coordonnées déterminée.

## Patentansprüche

1. Gerät (200) zur Kartierung von Messungen einer physikalischen Größe, **dadurch gekennzeichnet, dass** es Folgendes umfasst:
- mindestens zwei eigenständige Detektoren (100) zur Messung einer physikalischen Größe, die jeweils Folgendes enthalten:
- mindestens einen Sensor (105) mit einem Wert, der für eine physikalische Größe repräsentativ ist,
- eine Methode (110) zur Geolokalisierung, die so konfiguriert ist, dass sie Geolokalisierungskoordinaten des Detektors liefert,
- einen Sender (145) eines drahtlosen Signals, das jeden empfangenen Wert und die ermittelten Koordinaten repräsentiert, wobei der Sender (145) auch als Empfänger fungiert, und
- eine unabhängige Stromquelle (120), die für die Stromversorgung des Detektors konfiguriert ist,
jeder Sensor, das Geolokalisierungsmittel, der Sender und die Stromquelle sind in einem flexiblen Gehäuse (125) untergebracht, das Stößen standhält, und in einem wasserdichten Gehäuse (130),
die Vorrichtung (200), die ferner Folgendes umfasst:
- einen Empfänger (205) mit mindestens einem Funksignal von mindestens einem Detektor und
- ein Anzeigesystem, das so konfiguriert ist, dass es mindestens einen empfangenen repräsentativen Wert im Signal und eine repräsentative Information über die mit dem empfangenen Wert verbundenen Koordinaten anzeigt
- eine eigenständige Stromquelle (220) für wiederaufladbare Batterien oder Einwegbatterien und
- ein Mittel (225) zur Übertragung elektrischer Energie an mindestens einen Detektor (100), der an die Stromquelle angeschlossen ist.
**dadurch gekennzeichnet, dass** das Gerät zusätzlich eine Methode (230) zur Bestimmung der Koordinaten eines Detektors (100) enthält, die auf der Grundlage der von mindestens zwei Detektoren empfangenen Koordinaten zu positionieren ist, und eine Methode (210) zur Anzeige der ermittelten Koordinaten.

2. Vorrichtung nach Anspruch 1, wobei der innere Raum (130) des Gehäuses jedes autonomen Detektors (100), zwischen jedem Sensor (105), dem Mittel (110) zur Geolokalisierung, dem Sender (145) und der Quelle (120) der Stromversorgung, mit Schaum oder Luft gefüllt ist.

3. Vorrichtung nach einem der Ansprüche 1 oder2, wobei der autonome Detektor (100) ein Kommunikationsmittel (140) in einer Entfernung aufweist, die geringer ist als die Kommunikationsentfernung eines drahtlosen lokalen Netzwerks gemäß dem IEEE 802.11-Standard, dem so genannten "WLAN" oder nach Bluetooth-Technologie.

4. Vorrichtung (200) nach einem der Ansprüche 1 bis 3, die ein Streumittel jedes Detektors (100) an einem Standort umfasst, das von der Vorrichtung kartiert werden soll.

5. Vorrichtung (200) nach einem der Ansprüche 1 bis 4, die ein Mittel (215) zur Erzeugung einer Karte mit Isolinienkurven und einer Karte mit Varianz in Abhängigkeit von den erhaltenen Werten und Koordination umfasst, die jedem so genannten Wert zugeordnet ist.

6. Vorrichtung nach einem der Ansprüche 1 bis 5, die ein Kommunikationsmittel (235) zu einem externen Endgerät umfasst, mit mindestens einer Information, die repräsentativ für mindestens einen vom Gerät empfangenen Wert ist, und mindestens einer Information, die repräsentativ für die mit dem empfangenen Wert verbundenen Koordinaten ist.

7. Verfahren (300) zur Kartierung von Messungen einer physikalischen Größe an einem Standort mit einer Vorrichtung (200) nach einem der Ansprüche 1 bis 6, **dadurch gekennzeichnet, dass** es umfasst:
- einen Schritt (305) der Streuung an dem Standort von mindestens einem Detektor (100) des genannten Geräts (200),
- einen Schritt (310) der Erfassung eines repräsentativen Wertes einer physikalischen Größe durch jeden Detektor,
- einen Schritt (315) der Geolokalisierung des Detektors durch jeden Detektor,
- einen Schritt zum Empfang eines repräsentativen Signals jedes erfassten Werts und der von jedem Detektor ermittelten Koordinaten,
- einen Anzeigeschritt (330) mindestens eines im Signal empfangenen repräsentativen Wertes an einer Position auf dem Bildschirm, die den Koordinaten des empfangenen Wertes entspricht
- einen Schritt zur Übertragung der elektrischen Energie an mindestens einen Detektor (100), der an die Stromquelle angeschlossen ist, und
- einen Schritt zur Bestimmung der Koordinaten eines Detektors (100), der anhand der erhaltenen Koordinaten von mindestens zwei Detektoren zu positionieren ist, und ein Mittel (210) zur Anzeige der ermittelten Koordinaten.

## Claims

1. Device (200) for mapping measurements of a physical dimension, **characterised in that** it comprises:
- at least two self-contained detectors (100) for measuring a physical dimension, each of which comprises:
- at least one sensor (105) for sensing a value representing a physical dimension;
- a geolocation means (110), configured to provide geolocation coordinates of the detector;
- an emitter (145) of a wireless signal representing each detected value and the coordinates determined, the emitter (145) also acting as a receiver; and
- a self-contained electric power supply (120) configured to power the detector,each sensor, the geolocation means, the emitter and the power supply being embedded in a flexible, shock-resistant shell (125), and in a sealed shell (130), the device (200) further comprising:
- a receiver (205) of at least one wireless signal emitted by at least one detector; and
- a display system configured to display at least one representative value received in the signal and an item of information representative of the coordinates associated with the value received;
- a self-contained electric power supply (220) using rechargeable or disposable batteries; and
- a means (225) for transferring electric power to at least one detector (100) connected to the power supply,
**characterised in that** the device also comprises a means (230) for determining the coordinates of a detector (100) to be positioned as a function of coordinates received from at least two detectors; and a means (210) for displaying the coordinates determined.

2. Device according to claim 1, wherein the space (130) inside the shell of each self-contained detector (100), between each sensor (105), the geolocation means (110), the emitter (145) and the power supply (120), is filled with foam or air.

3. Device according to one of claims 1 or 2, wherein the self-contained detector (100) comprises a means (140) for communicating at a distance less than the communication distance of a local wireless network using standard IEEE 802.11 - "Wi-Fi" - or Bluetooth technology.

4. Device (200) according to one of claims 1 to 3, which comprises a means for distributing each detector (100) over a site intended to be mapped by the device.

5. Device (200) according to one of claims 1 to 4, which comprises a means (215) for generating a map of isoline curves and a variance map as a function of each received value and coordinate, associated to each said value.

6. Device according to one of claims 1 to 5, which comprises a means (235) for communicating, to an external communicating terminal, at least one item of information representative of at least one value received by the device, and at least one item of information representative of the coordinates associated with the value received.

7. Method (300) for mapping measurements of a physical dimension on a site, using a device (200) according to one of claims 1 to 6, **characterised in that** it comprises:
- a step (305) of distributing over the site at least one detector (100) of this device (200);
- a step (310) wherein each detector captures a value representative of a physical dimension;
- a step (315) wherein each detector geolocates this detector;
- a step of receiving a signal representative of each value detected and the coordinates determined;
- a step (330) of displaying, on a screen, at least one representative value received in the signal at a position on the screen corresponding to the coordinates associated with the value received;
- a step of transferring electric power to at least one detector (100) connected to the power supply; and
- a step of determining the coordinates of a detector (100) to be positioned as a function of coordinates received from at least two detectors; and a means (210) for displaying the coordinates determined.
